(19) **Europäisches Patentamt / European Patent Office / Office européen des brevets**

(11) **EP 4 523 875 B1**

(12) **EUROPEAN PATENT SPECIFICATION**

(45) Date of publication and mention
of the grant of the patent:
**06.05.2026 Bulletin 2026/19**

(21) Application number: **23803448.2**

(22) Date of filing: **26.04.2023**

(51) International Patent Classification (IPC):
**B29B 15/08** (2006.01)  **B29K 105/08** (2006.01)
**B29B 15/12** (2006.01)

(52) Cooperative Patent Classification (CPC):
**B29B 15/12; B29C 70/506**

(86) International application number:
**PCT/JP2023/016510**

(87) International publication number:
**WO 2023/218969 (16.11.2023 Gazette 2023/46)**

(54) **METHOD FOR MANUFACTURING FRP PRECURSOR AND METHOD FOR MANUFACTURING FRP**

VERFAHREN ZUR HERSTELLUNG EINES FRP-VORLÄUFERS UND VERFAHREN ZUR FRP-HERSTELLUNG

PROCÉDÉ DE FABRICATION DE PRÉCURSEUR DE PRV ET PROCÉDÉ DE FABRICATION DE PRV

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.05.2022 JP 2022077645**

(43) Date of publication of application:
**19.03.2025 Bulletin 2025/12**

(73) Proprietor: **Resonac Corporation**
**Tokyo 105-7325 (JP)**

(72) Inventors:
• **UMEZAKI Shota**
**Tokyo 105-8518 (JP)**
• **SASAKI Ryota**
**Tokyo 105-8518 (JP)**
• **SAITOH Takeshi**
**Tokyo 105-8518 (JP)**
• **NAKAMURA Yukio**
**Tokyo 105-8518 (JP)**

(74) Representative: **Hoffmann Eitle**
**Patent- und Rechtsanwälte PartmbB**
**Arabellastraße 30**
**81925 München (DE)**

(56) References cited:
**WO-A1-2016/178399  WO-A1-2018/181513**
**JP-A- 2013 159 723  JP-A- 2013 209 626**
**JP-A- H06 155 465  US-A1- 2005 028 925**
**US-A1- 2021 206 025**

EP 4 523 875 B1

**Description**

[Technical Field]

The present invention relates to a method for producing an FRP precursor as well as a method for producing an FRP.

[Background Art]

FRP (Fiber Reinforced Plastics) is a composite material using an aggregate having a high modulus, such as fibers, in which the aggregate is incorporated into a mother material (matrix) such as a plastic in order to enhance the strength thereof. Therefore, FRP is a cheap, light, and highly durable composite material utilizing its superior weatherability, lightness, and resistances to heat and chemicals.

By utilizing these characteristics, FRP is used in a wide variety of fields. For example, FRP is used in a wide variety of fields such as structural materials of housing equipment, a marine vessel, a vehicle, and an airplane because FRP can be molded and has high strength. It is also used in a field such as an electric device because of its electric non-conductance.

Illustrative examples of the FRP production method include: (1) an RTM (Resin Transfer Molding) method in which a resin is charged into a matched mold having an aggregate spread therein; (2) a Hand Lay-up (HLU) method and a spray-up method in which a resin is laminated in a multiple fashion onto a spread aggregate with defoaming the resin; and (3) an SMC (Sheet Molding Compound) press method in which an aggregate and a resin are pre-mixed and made to a form of a sheet, and then this is press-molded in a mold.

When the FRP is used for a printed wiring board, thickness of the FRP for the printed wiring board is required to be thinner than the thickness of the FRP for other uses. In addition, the FRP for the printed wiring board is required to have a high quality specification, such as absence of a void and a narrow acceptable range of variance in its thickness after FRP molding.

Accordingly, many FRP for the printed wiring board are produced by the Hand Lay-up (HLU) method. The Hand Lay-up method is the production method in which a varnish having a resin dissolved therein is applied to an aggregate by using a coating machine, which is then followed by drying it in order to remove a solvent and cure it with heating. Industrially, a vertical coating method is used in which an aggregate is transported into a vessel in which a resin varnish is charged, which is then followed by pulling up a FRP precursor having the resin varnish impregnated therein by a Roll-to-Roll method into a vertical drying oven (see Patent Document 1).

In recent years, however, in an electronic part used in electronic equipment, from the viewpoint of convenience in use and the like, further reduction in the weight and size thereof is required. Under such circumstances, a printed wiring board used in an electronic part is also reduced in the thickness and size thereof, so that a wiring pattern is made finer and an insulating layer is made thinner as well. Therefore, a thinner FRP is required, which in turn requires a thinner aggregate that is contained in the FRP. When the aggregate is made thinner in the vertical coating method, upon pulling-up the FRP precursor having the resin varnish impregnated therein by a Roll-to-Roll method, the weight of the FRP precursor outweighs the allowable load of the aggregate thereby occasionally resulting in a cut of the FRP precursor into piece.

On the other hand, as for the method other than the vertical coating method, a method has been known in which a resin film of a thermosetting resin is prepared in advance, which is followed by adhering an aggregate to the resin film and further followed by heating it to produce an FRP precursor (see Patent Document 2).

[Citation List]

[Patent Document]

Patent Document 1: Japanese Patent Laid-Open Publication No. H01-272416
Patent Document 2: International Patent Laid-Open Publication No. 2018/181513

[Summary of the Invention]

[Problems to be Solved by the Invention]

The inventors of the present invention carried out an extensive investigation on the method described in Patent Document 2; then, as a result, it was found that in the FRP, which is a cured product of the FRP precursor, especially in the FRP having copper foil, the production condition of the FRP precursor has an effect on "size-change rate" before and after "copper foil etching and drying by heating". In general, there is no significant problem with regard to the size-change rate of the FRP when the rate is constant without varying among the lots. However, a small size-change rate itself is prone to lower the variance among the lots, so that it is preferable to lower the size-change rate in an industrial production. Here, the lot means the products that are produced under the same condition.

Accordingly, an object of the present invention is to provide a method for producing the FRP precursor causing a small size-change rate after copper foil etching and drying by heating of the FRP as well as a method for producing the FRP.

[Means for Solving the Problems]

The inventors of the present invention carried out an extensive investigation in order to solve the problems described above, and as a result, the problems may be solved by the present invention. The present invention includes the embodiments [1] to [5] as described below.

[1] A method for producing an FRP precursor by adhering a thermosetting resin film to at least one surface of an aggregate that is in a form of a sheet, the method comprising:
after the adhesion, transporting the FRP precursor while imparting a tension of 1.5 to 5.5 N/25mm to the FRP precursor.
[2] The method for producing the FRP precursor according to [1], wherein
a thickness of the aggregate is 25 $\mu$m or less.
[3] The method for producing the FRP precursor according to [1] or [2], wherein
a tensile strength of the aggregate is 20 to 150 N/25mm.
[4] The method for producing the FRP precursor according to any one of [1] to [3], wherein
the adhesion of the thermosetting resin film to at least one surface of the aggregate that is in a form of a sheet is conducted under an atmospheric pressure.
[5] A method for producing an FRP, wherein the method includes curing of the FRP precursor obtained by the production method according to any one of [1] to [4].

[Advantageous Effects of Invention]

According to the present invention, a production method of an FRP precursor causing a low size-change rate by copper foil etching and drying by heating of an FRP as well as a production method of an FRP may be provided.

[Brief Description of the Drawing]

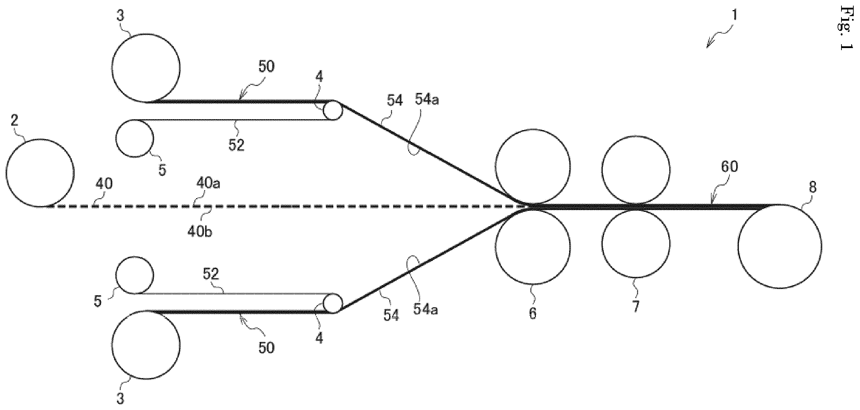

Figure 1 is a conceptual diagram illustrating one aspect of the method for producing the FRP precursor according to this embodiment.

[Description of the Embodiment]

In a numeral range described in this specification, the upper and lower limits of the numeral range may be substituted by the values described in Examples. In addition, the upper and lower limits of the numeral range may be arbitrarily combined with the upper and lower limits of other numeral range, respectively. In the expression of the numeral range by "AA to BB", the end values AA and BB are included in the numeral range as the upper and lower limits thereof.

In this specification, the description of, for example, "10 or more" means that the value is equal to 10 or more than 10: the same is true for other values. Similarly, the expression, for example, "10 or less" means that the value is equal to 10 or less than 10: the same is true for other values.

Each component and material described as an example in this specification may be used singly or in a combination of two or more of them, unless otherwise specifically mentioned. In this specification, the content of each component in a resin composition, in the case where a plurality of substances corresponding to each component is present in a resin composition, means a total amount of the components present in the resin composition, unless otherwise specifically mentioned.

In this specification, the term "resin component" is defined as all the components except for an inorganic compound such as an inorganic filler to be described later among the solid portion that makes up the resin composition.

In this specification, the term "solid portion" refers to the components other than an organic solvent in the resin composition. In other words, the solid portion includes those that are in the state of liquid around 25°C, and further includes those that are in the state of syrup or wax around 25°C.

The expression in this specification, for example, "containing substance A" may include A in the reacted state when A is able to react, or may include simply A as it is, or may include A in both states.

Embodiments in any combination of the items in this specification are included in the embodiments of this specification and embodiment.

[Method for Producing the FRP Precursor]

One aspect of this embodiment is a method for producing an FRP precursor by adhering a thermosetting resin film (hereinafter, this is sometimes referred to simply as "resin film") to at least one surface of an aggregate that is in a form of a sheet, the method comprising: after the adhesion, transporting the FRP precursor while imparting a tension of 1.5 to 5.5 N/25mm.

When the tension is 1.5 N/25mm or more, it is possible to avoid the aggregate from being impregnated with the resin film in a heap state. When the tension is 5.5 N/25mm or less, it is possible to lower the size-change rate before and after "copper foil etching and drying by heating" of the FRP, which is the cured product of the FRP precursor, especially of the FRP having copper foil (hereinafter, this changing rate is sometimes called simply as the FRP size-change rate). It is presumed that lowering of the FRP size-change rate is realized as a result of reduction in a stress or a strain that remains inside the FRP precursor due to the production method according to this embodiment.

From the same standpoint, the tension is preferably in the range of 1.8 to 5.0 N/25mm, more preferably in the range of 1.8 to 4.5 N/25mm, still more preferably in the range of 1.8 to 4.2 N/25mm, and especially preferably in the range of 1.8 to 3.5 N/25mm.

Hereinafter, with referring to Figure 1, explanation will be made about the embodiment according to the present invention with regard to the method for producing the FRP precursor and to an FRP precursor production device 1 that may be used in this production method. Here, the FRP precursor production device 1 will be explained as the device to adhere each of a pair of resin films (thermosetting resin films) 54 to both surfaces of an aggregate 40 in a form of a sheet; however, this device may also be the one in which one resin film 54 is adhered to only one surface of the aggregate 40 in a form of a sheet. In this case, in Figure 1, each one of resin film send-out devices 3, protection film peel-off mechanisms 4, and protection film roll-up devices 5, all of which are disposed on a lower side (or on an upper side) of the aggregate 40, are not necessary.

The FRP precursor production method according to this embodiment may be conducted by using the FRP precursor production device 1. There is no particular restriction in the FRP precursor production device 1; but from the viewpoint of avoiding a workability problem that is prone to occur when employing, for example, a vacuum laminator, this device may be placed under an atmospheric pressure, rather it is preferable to place under an atmospheric pressure. In other words, the thermosetting resin film may be adhered to at least one surface of the aggregate in a form of a sheet under an atmospheric pressure. Note that, in this specification, "under an atmospheric pressure" is the same meaning as "under a normal pressure".

The FRP precursor production device 1 is provided with the aggregate send-out device 2, a pair of the resin film send-out devices 3 and 3, a sheet heating and press-adhering device 6, and an FRP precursor roll-up device 8. Preferably, the FRP precursor production device 1 is further provided with a sheet pressing and cooling device 7, a pair of protection film peel-off mechanisms 4 and 4, and a pair of protection film roll-up devices 5 and 5. Note that "after the adhesion, transporting the FRP precursor while imparting a tension of 1.5 to 5.5 N/25mm" means that in the FRP precursor production device 1, the tension of 1.5 to 5.5 N/25mm is imparted to the FRP precursor while this is being transported from the sheet heating and press-adhering device 6 to the FRP precursor roll-up device 8. The tension that is imparted to the FRP precursor while this is being transported from the sheet heating and press-adhering device 6 to the FRP precursor roll-up device 8 may be controlled by changing the roll-up speed of the FRP precursor roll-up device 8.

On the other hand, the tension to be imparted to the aggregate while this is being transported from the aggregate send-out device 2 to the sheet heating and press-adhering device 6 is preferably the same as the tension to be imparted to the FRP precursor while this is being transported from the sheet heating and press-adhering device 6 to the FRP precursor roll-up device 8; specifically, the tension is preferably in the range of 1.5 to 5.5 N/25mm, more preferably in the range of 1.8 to 5.0 N/25mm, still more preferably in the range of 1.8 to 4.5 N/25mm, especially preferably in the range of 1.8 to 4.2 N/25mm, and at most preferably in the range of 1.8 to 3.5 N/25mm. The tension to be imparted to the aggregate while this is being transported from the aggregate send-out device 2 to the sheet heating and press-adhering device 6 may be adjusted by changing the send-out speed of the aggregate send-out device 2.

The aggregate send-out device 2 is the device in which a roll to which the aggregate 40 in a form of a sheet is rolled up is rotated to a direction opposite to a rolled-up direction thereby sending out the aggregate 40 that is rolled up in the roll. In Figure 1, the aggregate send-out device 2 sends out the aggregate 40 from a lower side of the roll toward the sheet heating and press-adhering device 6.

Each of the pair of the resin film send-out devices 3 and 3 has a roll to which a protection-film-attached resin film 50 is rolled up and a supporting mechanism to rotatably support the roll while imparting a prescribed tension to the protection -film-attached resin film 50 that is sent out from the roll, in which the roll to which the protection-film-attached resin film 50 is rolled up is rotated to a direction opposite to a rolled-up direction thereof so as to send out the protection-film-attached resin film 50 that is rolled up to the roll. Here, the tension to be imparted to the protection-film-attached resin film 50 is preferably the same as the tension to be imparted to the FRP precursor while this is being transported from the sheet heating and press-adhering device 6 to the FRP precursor roll-up device 8; specifically, the tension is preferably in the range of 1.5 to 5.5 N/25mm, more preferably in the range of 1.8 to 5.0 N/25mm, still more preferably in the range of 1.8 to 4.5 N/25mm, especially preferably in the range of 1.8 to 4.2 N/25mm, and at most preferably in the range of 1.8 to 3.5 N/25mm. The tension to be imparted to the protection-film-attached resin film 50 may be adjusted by changing the send-out speed of the resin film send-out devices 3 and 3.

The protection-film-attached resin film 50 is a film in a form of a sheet including a resin film 54 and a protection film 52 that is laminated to an aggregate-side film surface (of the both surfaces of the resin film 54, the surface on the side of the aggregate 40) 54a, which is one surface of the resin film 54.

Each of the pair of the resin film send-out devices 3 and 3 is located on the side of a front surface 40a and a side of a back surface 40b, respectively, of the sent-out aggregate 40.

One of the resin film send-out devices 3 is located on the side of the front surface 40a of the sent-out aggregate 40, in which one of the protection-film-attached resin films 50 is sent out from the lower side of the roll to one of the protection film peel-off mechanisms 4 in such a way that the protection film 52 may be on the side of the sent-out aggregate 40.

In the same way, the other resin film send-out device 3 is located on the side of the back surface 40b of the sent-out aggregate 40, in which the other protection-film-attached resin film 50 is sent out from the upper side of the roll to the other protection film peel-off mechanism 4 in such a way that the protection film 52 may be on the side of the sent-out aggregate 40.

The pair of the protection film peel-off mechanisms 4 and 4 are conversion rolls, each of which is located on the side of the front surface 40a and the side of the back surface 40b of the sent-out aggregate 40, respectively.

One of the protection film peel-off mechanisms 4 receives onto the surface of the rotating conversion roll the protection-film-attached resin film 50 that is sent out from one of the resin film send-out devices 3 toward one of the protection film peel-off mechanisms 4, in which one of the resin films 54 of one of the protection-film-attached resin films 50 is made to progress toward the sheet heating and press-adhering device 6, while one of the protection films 52 is made to progress toward one of the protection film roll-up devices 5, so that one of the protection films 52 is peeled off from one of the protection-film-attached resin films 50. In this way, the aggregate-side film surface 54a of one of the resin films 54 is exposed.

In the same way, the other protection film peel-off mechanism 4 receives onto the surface of the rotating conversion roll the protection -film -attached resin film 50 which is sent out from the other resin film send-out device 3 toward the other protection film peel-off mechanism 4, in which the other resin film 54 of the other protection-film-attached resin film 50 is made to progress toward the sheet heating and press-adhering device 6, while the other protection film 52 is made to progress toward the other protection film roll-up device 5, so that the other protection film 52 is peeled off from the other protection-film-attached resin film 50. In this way, the aggregate-side film surface 54a of the other resin film 54 is exposed.

Each of the pair of the protection film roll-up devices 5 and 5 is located on the side of the front surface 40a and the side of the back surface 40b of the sent-out aggregate 40, respectively, and rolls up the protection films 52 and 52 that are peeled off by the pair of the protection film peel-off mechanisms 4 and 4.

The sheet heating and press-adhering device 6 has a pair of the pressure rolls and a mechanism (not illustrated in the drawing) to impart a compression force to the pair of the pressure rolls. The pair of the pressure rolls has heating bodies inside thereof in order to heat with a prescribed set temperature.

The sheet heating and press-adhering device 6 forms an FRP precursor 60 in a form of a sheet by press-adhering the resin films 54 and 54 by means of the pair of the rotating pressure rolls to the aggregate 40 that is entered thereto (film pressing and adhering process) while sending-out the FRP precursor 60 toward the sheet pressing and cooling device 7.

Specifically, the aggregate 40 that is sent out from the aggregate send-out device 2 and the resin films 54 and 54 that are sent out from the pair of the protection film peel-off mechanisms 4 and 4, respectively, enter into between the pair of the pressure rolls in such a way that the front surface 40a and the back surface 40b of the aggregate 40 that is sent out from the aggregate send-out device 2 may be laminated to each of the resin films 54 and 54 that is sent out from the pair of the protection film peel-off mechanisms 4 and 4, respectively.

At this time, one of the resin films 54 is laminated to the aggregate 40 in such a way that the aggregate-side film surface 54a of this one resin film 54 may be adhered to the side of the front surface 40a of the aggregate 40, and the other resin film 54 is laminated to the aggregate 40 in such a way that the aggregate-side film surface 54a of this other resin film 54 may be adhered to the back side surface 40b of the aggregate 40. Under this state, the aggregate 40 is impregnated with the resin film 54 by means of the sheet heating and press-adhering device 6 to form the FRP precursor 60.

The sheet pressing and cooling device 7 has a pair of the cooling and pressing rolls and a mechanism (not illustrated in the drawing) to impart a compression force to the pair of the cooling and pressing rolls. The pair of the cooling and pressing rolls compresses and cools the FRP precursor 60 that is in a high temperature state, which is sent out from the sheet heating and press-adhering device 6, by the pair of the rotating, cooling and pressing rolls, and then sends out this FRP precursor to the FRP precursor roll-up device 8.

The FRP precursor roll-up device 8 has a roll to roll up the FRP precursor 60 in a form of a sheet that is sent out from the sheet pressing and cooling device 7, as well as a driving mechanism to rotate the roll (not illustrated in the drawing).

The FRP precursor production device 1 described above is operated in the way as described below.

First, the aggregate 40 in a form of a sheet is sent out from the aggregate send-out device 2 toward the sheet heating and press-adhering device 6. At this time, both the front surface 40a and the back surface 40b of the aggregate 40 are exposed.

On the other hand, one of the protection-film-attached resin films 50 is sent out from the lower side of the roll of one of the resin film send-out devices 3 toward one of the protection film peel-off mechanisms 4 in such a way that the protection film 52 may be on the side of the sent-out aggregate 40. The other protection-film-attached resin film 50 is sent out from the upper side of the roll of the other resin film send-out device 3 toward the other protection film peel-off mechanism 4 in such a way that the protection film 52 may be on the side of the sent-out aggregate 40.

Next, when one of the protection-film-attached resin films 50 that is sent out changes the direction thereof upon reaching the conversion roll, i.e., one of the protection film peel-off mechanisms 4, one of the protection films 52 is peeled off from one of the protection-film-attached resin films 50 in such a way that the aggregate-side film surface 54a may be exposed, whereby one of the resin films 54 is progressed toward the sheet heating and press-adhering device 6. In this way, the aggregate-side film surface 54a of one of the resin films 54 is exposed. In the same way, when the other protection-film-attached resin film 50 that is sent out changes the direction thereof upon reaching the conversion roll, i.e., the other protection film peel-off mechanism 4, the other protection film 52 is peeled off from the other protection-film-attached resin film 50 in such a way that the aggregate-side film surface 54a may be exposed, whereby the other resin film 54 is progressed toward the sheet heating and press-adhering device 6. In this way, the aggregate-side film surface 54a of the other resin film 54 is exposed.

Each of the pair of the protection films 52 and 52 that are peeled off is rolled up by the pair of the protection film roll-up devices 5 and 5, respectively.

The aggregate 40 that is sent out from the aggregate send-out device 2 and the resin films 54 and 54 each of which is sent out from the pair of the protection film peel-off mechanisms 4 and 4, respectively, enter into the pair of the pressure rolls in such a way that each of the resin films 54 and 54 may be laminated to the aggregate 40 that is sent out from the aggregate send-out device 2. Then, under a normal pressure, the pair of the resin films 54 and 54 is press-adhered to the aggregate 40 by means of the sheet heating and press-adhering device 6 to obtain the FRP precursor 60 (film press-adhering process). At this time, by controlling the temperature of the heating body inside the pair of the pressure rolls possessed by the sheet heating and press-adhering device 6, the pair of the pressure rolls is kept at a prescribed temperature, and whereby it imparts a pressure with heating so as to carry out the film pressing and adhering process.

Here, from the viewpoint of easily imparting the tension to the aggregate, a supporting roll may be installed between the aggregate send-out device 2 and the sheet heating and press-adhering device 6 as appropriate (not illustrated in the drawing).

Here, according to one aspect of this embodiment, during the time that the resin film is press-adhered to the aggregate with heating, the temperature of the pressure roll is, in view of the resin filling property, preferably in the range of +5°C to +35°C relative to the temperature at which the minimum melt viscosity of the resin film is exhibited, more preferably in the range of +8°C to +32°C relative to the temperature at which the minimum melt viscosity of the resin film is exhibited, and still more preferably in the range of +10°C to +30°C relative to the temperature at which the minimum melt viscosity of the resin film is exhibited. Here, the temperature at which the minimum melt viscosity of the resin film is exhibited is the value measured with a rheometer, more specifically, the value obtained by measurement with the method described in Examples. The roll linear pressure of the pressure roll under the condition that the pressure roll is at this temperature is, in view of the resin filling property, preferably in the range of 10 to 100 N/cm, more preferably in the range of 20 to 100 N/cm, and still more preferably in the range of 20 to 60 N/cm.

According to other aspect of this embodiment, during the time that the resin film is press-adhered to the aggregate with heating, even in the case that the temperature of the pressure roll is less than +5°C relative to the temperature at which the minimum melt viscosity of the resin film is exhibited, when the roll linear pressure of the pressure roll is in the range of 20 to 100 N/cm, the resin filling property may be satisfactory. The roll linear pressure at this time may be in the range of 20 to 80 N/cm, in the range of 20 to 70 N/cm, or in the range of 20 to 60 N/cm.

In this embodiment, the temperature at which the minimum melt viscosity of the resin film is exhibited is different depending on the material of the resin film; however, in view of productivity of the FRP precursor, the temperature is preferably in the range of 60 to 150°C, more preferably in the range of 80 to 140°C, still more preferably in the range of 100 to 140°C, and especially preferably in the range of 120 to 140°C.

The FRP precursor 60 that is sent out from the sheet heating and press-adhering device 6 is pressed further and cooled by the sheet pressing and cooling device 7.

The FRP precursor 60 that is sent out from the sheet pressing and cooling device 7 is rolled up by the FRP precursor roll-up device 8.

[Method for Producing FRP]

The present invention also provides a method for producing an FRP, the method including a process in which the FRP precursor obtained by the method for producing the FRP precursor is cured (made to a C-stage). In this specification, making to a C-stage means bringing to the state of a C-stage that is defined by JIS K6900 (1994).

There is no particular restriction in the condition to cure the FRP precursor; preferably, the curing may be conducted by heating at the temperature of 160 to 250°C for the period of 15 to 60 minutes.

Here, in the case of producing the FRP for a printed wiring board, after metal foil is disposed either on one sheet of the FRP precursor or on a stack of 2 to 20 sheets of the FRP precursor, this may be molded with laminating under the conditions of the temperature of 100 to 250°C, the pressure of 0.2 to 10 MPa, and the heating period of 0.1 to 5 hours to form a laminate including the FRP. As described above, it is not always necessary to cure the FRP precursor alone; the FRP precursor may be cured under the state that it is laminated with metal foil or with various resin films.

Hereinafter, the aggregate and the resin film to be used for production of the FRP precursor will be specifically explained.

[Aggregate]

As for the aggregate, heretofore known materials used in laminates for various electric insulating materials may be used. Illustrative examples of the aggregate material include natural fibers such as a paper and a cotton linter; inorganic fibers such as a glass fiber and asbestos; organic fibers such as fibers of aramid, polyimide, polyvinyl alcohol, polyester, tetrafluoroethylene, and acryl; and a mixture of them. Among them, from the viewpoint of flame-retardancy, a glass fiber is preferable. Illustrative examples of the material of the glass fiber include a woven fabric using an E glass, a C glass, a D glass, an S glass, or the like, or a glass woven fabric obtained by adhering short fibers of these by means of an organic binder; and a mixed woven fabric of a glass fiber and a cellulose fiber. More preferable is a glass woven fabric, and even more preferable is a glass woven fabric using an E glass.

These aggregates may be, for example, in the form of a woven fabric, a nonwoven fabric, a roving, a chopped strand mat, and a surfacing mat. Here, the material and form thereof may be selected in accordance with the use and performance of the target molded article. They may be used singly, or as a mixture of two or more materials or forms as needed. The aggregate is preferably in the form of a woven fabric.

In one aspect according to this embodiment, the thickness of the aggregate may be 25 μm or less. When the thickness of the aggregate is 25 μm or less, the tensile strength of the aggregate is prone to be in the range of 20 to 150 N/25mm; even when the tensile strength of the aggregate is in this level, the FRP precursor may be produced with avoiding the aggregate from being cut by pulling. The thickness of the aggregate may be in the range of 3 to 25 μm, in the range of 10 to 23 μm, or in the range of 10 to 20 μm. The mass (basis weight) of the aggregate per unit area may be in the range of 7 to 30 $g/m^2$, in the range of 8 to 25 $g/m^2$, in the range of 10 to 20 $g/m^2$, or in the range of 10 to 15 $g/m^2$. When the aggregate is a woven fabric, the density of the aggregate may be in the range of 50 to 120 threads/25mm vertically and in the range of 50 to 120 threads/25mm horizontally, in the range of 70 to 110 threads/25mm vertically and in the range of 70 to 110 threads/25mm horizontally, or in the range of 80 to 105 threads/25mm vertically and in the range of 80 to 105 threads/25mm horizontally. The tensile strength of the aggregate may be in the range of 20 to 150 N/25mm, in the range of 40 to 100 N/25mm, in the range of 45 to 80 N/25mm, or in the range of 45 to 65 N/25mm.

[Resin Film]

The resin film to be used in the production method of this embodiment is a thermosetting resin film, which is obtained by shaping a thermosetting resin composition into a form of a film. There is no particular restriction in the thickness of the resin film; but this is preferably in the range of 2 to 40 μm, more preferably in the range of 4 to 30 μm, and still more preferably in the range of 5 to 20 μm.

The thermosetting resin composition includes at least a thermosetting resin. Besides the thermosetting resin, as needed, it is preferable to include at least any one material selected from a curing agent, a curing facilitator, an inorganic filler, an organic filler, a coupling agent, a leveling agent, an antioxidant, a flame retardant, a flame retardant adjuvant, a thixotropic agent, a thickener, a thixotropy imparting agent, a flexible material, a surfactant, a photo-polymerization initiator, and the like.

Hereinafter, each component to be included in the thermosetting resin composition will be explained in sequence.

(Thermosetting Resin)

Illustrative examples of the thermosetting resin include an epoxy resin, a maleimide compound, a modified polyphenylene ether resin, a phenol resin, a polyimide resin, a cyanate resin, an isocyanate resin, a benzoxazine resin, an oxetane resin, an amino resin, an unsaturated polyester resin, an allyl resin, a dicyclopentadiene resin, a silicone resin, a triazine resin, and a melamine resin. The thermosetting resin is not limited particularly to these resins so that any heretofore known thermosetting resin may be used. These may be used singly, or concurrently as a mixture of two or more of them. It is preferable that the thermosetting rein includes one or more resins selected from the group consisting of an epoxy resin, a maleimide compound, a modified polyphenylene ether resin, a phenol resin, a polyimide resin, a cyanate resin, and an isocyanate resin. Among them, in view of workability, moldability, and production cost, an epoxy resin is more preferable.

Illustrative examples of the epoxy resin include: novolac epoxy resins such as a cresol novolac epoxy resin, a phenol novolac epoxy resin, a naphthol novolac epoxy resin, an aralkyl novolac epoxy resin, and a biphenyl novolac epoxy resin; bisphenol epoxy resins such as a bisphenol A epoxy resin, a bisphenol F epoxy resin, a bisphenol AD epoxy resin, a bisphenol S epoxy resin, a bisphenol T epoxy resin, a bisphenol Z epoxy resin, and a tetrabromobisphenol A epoxy resin; a biphenyl epoxy resin, a tetramethyl biphenyl epoxy resin, a triphenyl epoxy resin, a tetraphenyl epoxy resin, a naphthol aralkyl epoxy resin, a naphthalenediol aralkyl epoxy resin, a naphthol aralkyl epoxy resin, a fluorene epoxy resin, an epoxy resin having a hydrogenated dicyclopentadiene skeleton, an epoxy resin having a skeleton of an ethylenic unsaturated group, and an alicyclic epoxy resin; a diglycidyl ether compound of a polyfunctional phenol; and hydrogenated compounds of these resins. These epoxy resins may be used singly, or in view of insulation reliability and heat resistance, concurrently as a mixture of two or more of them.

There is no particular restriction in the epoxy resin. In view of imparting flexibility, the epoxy resin may be the one which has two or more epoxy groups in its molecule and also has in its main chain a structural unit derived from an alkylene glycol having 3 or more carbon atoms in the alkylene group therein. In view of further enhancement of the flexibility, two or more of the structural unit derived from the alkylene glycol having 3 or more carbon atoms in the alkylene group therein may be repeated continuously.

As for the alkylene glycol having 3 or more carbon atoms in the alkylene group therein, the alkylene glycol having 4 or more carbon atoms in the alkylene group therein is preferable. The upper limit of the number of the carbon atoms in the alkylene group is not particularly limited; but it is preferably 15 or less, more preferably 10 or less, and still more preferably 8 or less.

In view of the flame retardancy, a halogenated epoxy resin may be used as the epoxy resin.

(Curing Agent)

When the thermosetting resin is the epoxy resin, illustrative examples of the curing agent include the epoxy resin curing agents such as a phenolic curing agent, a cyanate ester curing agent, an acid anhydride curing agent, an amine curing agent, and a compound having an active ester group. Here, in the case where the thermosetting resin is a resin other than the epoxy resin, heretofore known curing agents for this particular thermosetting resin may be used. These curing agents may be used singly, or concurrently as a mixture of two or more of them.

There is no particular restriction in the phenolic curing agent. Illustrative preferable examples thereof include a cresol novolac curing agent, a biphenyl curing agent, a phenol novolac curing agent, a naphthylene ether curing agent, and a phenolic curing agent having a triazine skeleton. Among them, a cresol novolac curing agent is preferable.

There is no particular restriction in the cyanate ester curing agent. Illustrative examples thereof include bisphenol A dicyanate, polyphenol cyanate(oligo(3-methylene-1,5-phenylene cyanate)), 4,4'-methylenebis(2,6-dimethylphenylcyanate), 4,4'-ethylidenediphneyl dicyanate, hexafluorobisphenol A dicyanate, 2,2-bis(4-cyanate)phenyl propane, 1,1-bis(4-cyanatephenylmethane), bis(4-cyanate-3,5-dimethylphenyl)methane, 1,3-bis(4-cyanatephenyl-1-(methylethylidene)) benzene, bis(4-cyanatephenyl) thioether, and bis(4-cyanatephenyl) ether.

There is no particular restriction in the acid anhydride curing agent. Illustrative examples thereof include phthalic anhydride, tetrahydrophthalic anhydride, hexahydrophthalic anhydride, methyl tetrahydrophthalic anhydride, methyl hexahydrophthalic anhydride, methyl nadic anhydride, hydrogenated methyl nadic anhydride, trialkyl tetrahydrophthalic anhydride, dodecenyl succinic anhydride, 5-(2,5-dioxotetrahydro-3-furanyl)-3-methyl- 3-cyclohexene- 1,2-dicarboxylic acid anhydride, trimellitic anhydride, and pyromellitic anhydride.

There is no particular restriction in the amine curing agent. Illustrative examples thereof include aliphatic amines such as triethylene tetramine, tetraethylene pentamine, and diethylamino propylamine; and aromatic amines such as m-phenylene diamine and 4,4'-diamino diphenyl methane.

In addition, a urea resin and the like may be used as the curing agent.

When the thermosetting resin composition includes the curing agent, the content thereof relative to 100 parts by mass of the thermosetting resin is preferably in the range of 20 to 150 parts by mass, more preferably in the range of 20 to 100 parts by mass, and still more preferably in the range of 40 to 100 parts by mass.

Here, the amount of the epoxy resin curing agent to be blended is preferably in the range of 0.3 to 1.5 equivalents as the equivalent ratio of the curing agent's reactive group relative to 1 epoxy equivalent of the epoxy resin. When the blended amount of the epoxy resin curing agent is within the above-mentioned range, the cure degree may be readily controlled, so that the productivity may be enhanced.

(Curing Facilitator)

As for the curing facilitator, general curing facilitators that are used for curing the afore-mentioned thermosetting resin may be used. For example, when the thermosetting resin is the epoxy resin, illustrative examples of the curing facilitator include imidazole compounds and derivatives thereof; phosphorous compounds; tertiary amine compounds; and quaternary ammonium compounds. In view of facilitating the curing reaction, imidazole compounds and derivatives thereof are preferable.

Specific examples of the imidazole compound and derivative thereof include: imidazole compounds such as 2-methylimidazole, 2-ethylimidazole, 2-undecylimidazole, 2-phenylimidazole, 1,2-dimethylimidazole, 2-ethyl-1-methylimidazole, 1-ethyl-2-methylimidazole, 2-ethyl-4-methylimidazole, 4-ethyl-2-methylimidazole, 2-phenyl-4-methylimidazole, 1-benzyl-2-phenylimidazole, 1-cyanoethyl-2-methylimidazole, 2-phenyl-4,5-dihydroxymethylimidazole, 2,3-dihydro-1H-pyrro[1,2-a]benzimidazole, 2,4-diamino-6-[2'-methylimidazolyl-(1')]ethyl-s-triazine, 2,4-diamino-6-[2'-undecylimidazolyl-(1')]ethyl-s-triazine, and 2,4-diamino-6-[2'-ethyl-4'-methylimidazolyl-(1')]ethyl-s-triazine; modified imidazole compounds such as an isocyanate-masked imidazole and an epoxy-masked imidazole; salts of the above-mentioned imidazole compounds with trimellitic acid, such as 1-cyanoethyl-2-phenylimidazolium trimellitate; salts of the above-mentioned imidazole compounds with isocyanuric acid; and salts of the above-mentioned imidazole compounds with hydrogen bromide. Among these, the modified imidazole compounds are preferable, while the isocyanate-masked imidazole is more preferable. The imidazole compounds may be used singly, or concurrently as a mixture of two or more of them.

When the thermosetting resin composition includes the curing facilitator, the content thereof relative to 100 parts by mass of the thermosetting resin is, in view of storage stability and physical properties of the thermosetting resin composition, preferably in the range of 0.1 to 20 parts by mass, more preferably in the range of 0.1 to 10 parts by mass, and still more preferably in the range of 0.5 to 6 parts by mass.

(Inorganic Filler)

Owing to the inorganic filler, a non-transmitting property and an abrasion resistance may be enhanced, as well as a thermal expansion rate may be lowered.

Illustrative examples of the inorganic filler include: oxides such as silica, aluminum oxide, zirconia, mullite, and magnesia; hydroxides such as aluminum hydroxide, magnesium hydroxide, and hydrotalcite; nitride ceramics such as aluminum nitride, silicon nitride, and boron nitride; natural minerals such as talc, montmorillonite, and saponite; metal particles and carbon particles; and molybdate compounds such as zinc molybdate. Among these, oxides and hydroxides are preferable, silica and aluminum hydroxide are more preferable, and aluminum hydroxide is still more preferable.

When the thermosetting resin composition includes the inorganic filler, the content thereof in the solid portion of the thermosetting resin composition is preferably in the range of 0.1 to 65% by volume, though the content is different depending on the purpose of the addition. For the purposes of coloring and non-transmitting property, when the amount thereof is 0.1% by volume or more, it tends to express sufficient effects. On the other hand, in the case that the addition is made for the purpose to increase the volume, when the amount thereof is limited to 65% by volume or less, not only a decrease in the adhesion strength may be suppressed, but also an excessive increase in the viscosity at the time of blending of the resins may be avoided, so that deterioration of the workability may be readily suppressed. From the same viewpoints, the content of the inorganic filler is more preferably in the range of 5 to 50% by volume, still more preferably in the range of 10 to 40% by volume. The content of the inorganic filler in the solid portion of the thermosetting resin composition on the mass basis is preferably in the range of 0.1 to 85% by mass, more preferably in the range of 10 to 75% by mass, and still more preferably in the range of 20 to 65% by mass.

It must be noted here that the solid portion in this specification means the components other than volatile substances such as water and an organic solvent to be mentioned later in the composition. In other words, the solid portion includes those that are in a liquid state, a syrup state, and a waxy state at room temperature around 25°C; and therefore, this does not necessarily mean it is in a solid state.

(Coupling Agent)

When the coupling agent is included therein, not only dispersion of the inorganic filler and the organic filler may be improved but also adhesion to the aggregate may be improved. The coupling agent may be used singly, or concurrently as a mixture of two or more of them.

As for the coupling agent, a silane coupling agent is preferable. Illustrative examples of the silane coupling agent include an aminosilane coupling agent [such as 3-aminopropyl trimethoxy silane and N-(2-aminoethyl)-3-aminopropyl triethoxy silane], an epoxysilane coupling agent [such as 3-glycidoxypropyl trimethoxy silane and 2-(3,4-epoxycyclohexyl) ethyl trimethoxy silane], a phenylsilane coupling agent, an alkylsilane coupling agent, an alkenylsilane coupling agent [for example, vinylsilane coupling agents such as vinyl trichlorosilane and vinyl triethoxy silane], an alkynylsilane coupling agent, a haloalkylsilane coupling agent, a siloxane coupling agent, a hydrosilane coupling agent, a silazane coupling agent, an alkoxysilane coupling agent, a chlorosilane coupling agent, a (meth)acrylsilane coupling agent, an aminosilane coupling agent, an isocyanurate silane coupling agent, a ureidosilane coupling agent, a mercaptosilane coupling agent, a sulfidesilane coupling agent, and an isocyanate silane coupling agent. Among them, an epoxysilane coupling agent is preferable, and 3-glycidoxypropyl trimethoxy silane is more preferable.

Also, a so-called titanate coupling agent, which is the one having the silane portion thereof substituted with a titanate group, may be used.

When the thermosetting resin composition includes the coupling agent, the content thereof relative to 100 parts by mass of the thermosetting resin is preferably in the range of 0.1 to 5 parts by mass, more preferably in the range of 0.1 to 4 parts by mass, and still more preferably in the range of 0.5 to 3 parts by mass. When the content is 0.01 by mass or more, the surface of the aggregate and the surface of the filler are prone to be sufficiently covered; when the content is 5 by mass or less, formation of excess coupling agent is prone to be suppressed.

(Organic Solvent)

From a viewpoint to improve handling property, an organic solvent may be further included in the resin composition. In this specification, the resin composition including an organic solvent is sometimes called as a resin varnish. At the time when the resin film formed, in view of workability, the resin composition is preferably used as the resin varnish.

There is no particular restriction in the organic solvent. Illustrative examples thereof include: alcoholic solvents such as methanol, ethanol, propanol, butanol, methyl cellosolve, butyl cellosolve, propylene glycol monomethyl ether, ethylene glycol monoethyl ether, dipropylene glycol monomethyl ether, dipropylene glycol monoethyl ether, and tripropylene glycol monomethyl ether; ketone solvents such as acetone, methyl ethyl ketone, methyl isobutyl ketone, butanone, cyclohexanone, and 4-methyl-2-pentanone; ester solvents such as ethyl acetate, butyl acetate, and propylene glycol monomethyl ether acetate; ether solvents such as tetrahydrofuran; aromatic solvents such as toluene, xylene, and mesitylene; nitrogen atom containing solvents such as N,N-dimethylformamide, N,N-dimethylacetamide, and N-methylpyrrolidone; and sulfur atom containing solvents such as dimethyl sulfoxide. Among them, in view of solubilizing property and appearance after coating, ketone solvents are preferable; cyclohexanone, methyl ethyl ketone, and methyl isobutyl ketone are more preferable; cyclohexanone and methyl ethyl ketone are still more preferable.

These organic solvents may be used singly, or concurrently as a mixture of two or more of them.

In view of easy application, content of the organic solvent is controlled, for example, in such a manner that the solid portion in the resin composition may be in the range of 20 to 85% by mass, more preferably in the range of 40 to 80% by mass.

(Method for Producing the Thermosetting Resin Film)

First, after the thermosetting resin and, as needed, other components are added into the solvent, they are mixed and stirred by using various mixing machines to obtain the resin varnish. Illustrative examples of the type of the mixing machine include an ultrasonic dispersion type, a high-pressure collision dispersion type, a high-speed rotation dispersion type, a bead mill type, a high-speed shearing dispersion type, and a planetary centrifugal dispersion type. The resin varnish thus obtained is applied to a carrier film; and then, after an unnecessary organic solvent is removed, the varnish is semi-cured (made to a B-stage) to obtain the thermosetting resin film (resin film). In this specification, making to a B-stage means bringing this varnish to the state of a B-stage that is defined by JIS K6900 (1994).

Illustrative examples of the carrier film include films of organic substances such as polyethylene terephthalate (PET), biaxially oriented polypropylene (OPP), polyethylene, polyvinyl fluoride, and polyimide; films of copper or aluminum, as well as alloy films of these metals; and these organic films or metal films whose surfaces have been subjected to a release treatment by a release agent.

At the time when the resin film thus obtained is rolled up by a roll, when the carrier film is disposed to the semi-cured surface that is formed by applying the thermosetting resin composition, and thereby the carrier film is rolled up in the state of interposing the thermosetting resin composition, the workability is so good that this way is preferable.

There is no particular restriction in the thickness of the resin film. When the resin film that is thinner than the thickness of the aggregate is used, one, or two or more sheets of the resin film may be adhered to one surface of the aggregate. When two or more sheets of the resin film are used, resin films having different thermal cure degrees, or compositions having different formulation, or the like may be combined and used.

The FRP precursor may be thermally cured after it is cut to any size as needed and adhered to a prescribed material as needed. The FRP precursor may also be used by roll-to-roll after it is previously rolled up to a roll.

[Examples]

Hereinafter, this embodiment will be specifically explained by Examples. Note that this embodiment is not limited to Examples below.

The tensile strength of the glass woven fabric used in each Example was measured by the method described below.

The size-change rate of the FRP precursor obtained in each Example was measured by the method described below, and the appearance thereof was evaluated.

(1. Tensile Strength of Glass Woven Fabric)

The tensile strength of the glass woven fabric used in each Example was measured by the method in accordance with JIS R3420 (2013).

(2. Size-change Rate)

On the both surfaces of the laminate formed of two sheets of the FRP precursor obtained in each Example were stacked copper foil "3EC-M3-VLP-12" (manufactured by Mitsui Mining & Smelting Co., Ltd.), which was then followed by press molding under the conditions with the temperature of 230°C and the pressure of 3.0 MPa for 120 minutes to obtain a copper-clad laminate (FRP). Four sheets of the same copper-clad laminate were prepared, and all of them were subjected to the following operations (1) to (3).

(1) Four evaluation samples having the size of 240 mm square were cut out from the central portion of each of the resulting copper clad laminates. Each sample was drilled to make holes with the diameter of 1.0 mm at four corners thereof (distance from one side: 10.0 mm); then, the distances between the holes in the MD and TD directions were measured as the standard (this distance is expressed by "L0").

(2) Next, after the copper foil of the evaluation sample having the holes prepared in (1) was etched with a cupric chloride solution and dried at 105°C for 30 minutes, the distances between the holes (this distance is expressed by "L1") were measured. The difference between the distance (L1) between the holes at this time and the distance (L0) between the holes measured in (1) were calculated using the following formula to determine the size-change rate.

$$\text{Size-change rate } (\%) = 100 \times (L1 - L0) / L0$$

(3) Finally, after the evaluation sample obtained in (2) was further dried at 180°C for 1 hour, the distances between the holes (L2) in the MD and TD directions were measured. The difference between the distance between the holes at this time (this distance is expressed by "L2") and the distance (L0) between the holes measured in (1) were calculated using the following formula to determine the size-change rate.

Here, the size-change rates above were obtained using the average values of 2 MD directions and 2 TD directions, respectively, in one sheet of the evaluation sample, and using the average value of the 4 evaluation samples.

$$\text{Size-change rate } (\%) = 100 \times (L2 - L0) / L0$$

(3. Appearance)

The FRP precursors prepared in Examples were visually evaluated according to the following criteria.

A: The surface of the FRP precursor appears to be smooth.
B: There appears a linear scar on the surface of the FRP precursor, indicating that the glass woven fabric in a heap state is impregnated with the resin film.
C: The glass woven fabric was cut to pieces, so that FRP precursor was unable to be obtained.

[Production Example 1] Production of the Resin Film 1

(Preparation of the Thermosetting Resin Varnish 1)

To 100 parts by mass of a cresol novolac epoxy resin "EPICLON (registered trademark) N-660" (manufactured by DIC Corp.) and 60 parts by mass of a cresol novolac resin "Phenolite (registered trademark) KA-1165" (manufactured by DIC Corp.) were added 15 parts by mass of cyclohexanone and 130 parts by mass of methyl ethyl ketone; and then, the resulting mixture was thoroughly stirred for dissolution. To this were added 180 parts by mass of aluminum hydroxide, 1 part by mass of a coupling agent "A-187" (manufactured by Momentive Performance Materials, Inc.), and 2.5 parts by mass of an isocyanate-masked imidazole "G8009L" (curing facilitator, manufactured by DKS Co. Ltd.); then, the resulting mixture was stirred for dissolution and dispersion to prepare the thermosetting resin varnish 1 with the solid portion of 70% by mass.

(Production of the Resin Film 1)

The thermosetting resin varnish 1 thus obtained was applied to a PET film (G-2, manufactured by Teijin DuPont Films Japan Ltd.) having the width of 580 mm so as to give the application width of 540 mm and the thickness after drying of 15 $\mu$m, which was then followed by drying at 100°C for 3 minutes to prepare the resin film 1. When the minimum melt viscosity temperature of the resin film 1 thus prepared was measured by using a rheometer "AR-200ex" (jig of 20 mm diameter, manufactured by TA Instruments Japan Inc.) with the temperature raising rate of 3°C/minute, it was 130°C.

[Examples 1 to 4 and Comparative Examples 1 to 2] Production of the FRP Precursor

By using the FRP precursor production device 1, the FRP precursor derived from the resin film with the solid portion concentration of 76% by mass was produced. The resin film 1 produced in Production Example 1 was used as the resin film, and the glass woven fabric (thickness of 15 $\mu$m, IPC #1017, aggregate width of 550 mm, manufactured by Nitto Boseki Co., Ltd.) was used as the aggregate. The aggregate was impregnated with the resin film from both sides thereof.
The conditions described in Table 1 were used in production of the FRP precursor. Using the FRP precursor thus prepared in each Example, the appearance was evaluated and the size-change rate was measured. The results of these are listed in Table 1.

[Comparative Example 3] Production of the FRP Precursor by the Vertical Coating Method

Using the vertical coating device, production of the FRP precursor derived from the resin film 1 with the solid portion concentration of 76% by mass was attempted by using the thermosetting varnish 1 and the glass woven fabric (thickness of 15 $\mu$m, IPC #1017, aggregate width of 550 mm, manufactured by Nitto Boseki Co., Ltd.) as the aggregate.

[Table 1]

Table 1

| | Comparative Example | Example | | | | Comparative Example | |
|---|---|---|---|---|---|---|---|
| | 1 | 1 | 2 | 3 | 4 | 2 | 3 |
| Thickness of glass woven fabric ($\mu$m) | 15 | 15 | 15 | 15 | 15 | 15 | 15 |
| Tensile strength of glass woven fabric (N/25-mm) | 51 | 51 | 51 | 51 | 51 | 51 | 51 |

(continued)

| | | Comparative Example | Example | | | | Comparative Example | |
|---|---|---|---|---|---|---|---|---|
| | | 1 | 1 | 2 | 3 | 4 | 2 | 3 |
| Production conditions of FRP precursor | Tension imparted to FRP precursor being transported from sheet heating and press-adhering device 6 to FRP precursor roll-up device 8 (N/25mm) | 1.0 | 2.0 | 3.0 | 4.0 | 5.0 | 6.0 | 15.0*1 |
| | Roll temperature of sheet heating and press-adhering device 6 (°C) | 160 | 160 | 160 | 160 | 160 | 160 | - |
| Evaluation/measurement results | Appearance | B | A | A | A | A | A | C |
| | Size-change rate in MD direction (%) L0→L1 | - | -0.014 | -0.015 | -0.020 | -0.028 | -0.039 | - |
| | Size-change rate in TD direction (%) L0→L1 | - | -0.015 | -0.015 | -0.014 | -0.015 | -0.018 | - |
| | Size-change rate in MD direction (%) L0→L2 | - | -0.023 | -0.022 | -0.024 | -0.040 | -0.057 | - |
| | Size-change rate in TD direction (%) L0→L2 | - | -0.022 | -0.022 | -0.022 | -0.022 | -0.028 | - |

*1: Tension imparted to the pulling-up FRP precursor after having been impregnated with varnish in the vertical coating method.

From Table 1, it can be seen that even though the FRP precursors obtained in Examples 1 to 4 are the FRP precursors that include the thin glass woven fabric, not only they have excellent appearance but also the copper clad laminates obtained from the FRP precursor are low in the size-change rate thereof.

On the other hand, Comparative Example 1 in which the tension of 1.0 N/25mm was imparted to the FRP precursor while being transported from the sheet heating and press-adhering device 6 to the FRP precursor roll-up device 8 resulted in poor appearance. Also, Comparative Example 2 in which the tension of 6.0 N/25mm was imparted to the FRP precursor while being transported from the sheet heating and press-adhering device 6 to the FRP precursor roll-up device 8 resulted in a larger size-change rate as compared with Examples.

In Comparative Example 3 in which the vertical coating method was used, in the pulling-up process of the FRP precursor after the varnish was applied to the glass woven fabric, the production of the FRP precursor itself was unable because the thin glass woven fabric was broken.

[Reference Signs List]

| | |
|---|---|
| 1 | FRP precursor production device |
| 2 | Aggregate send-out device |
| 3 | Resin film send-out device |
| 4 | Protection film peel-off mechanism |
| 5 | Protection film roll-up device |
| 6 | Sheet heating and press-adhering device |
| 7 | Sheet pressing and cooling device |
| 8 | FRP precursor roll-up device |
| 40 | Aggregate |
| 40a | Front surface of aggregate |
| 40b | Back surface of aggregate |
| 50 | Protection-film-attached resin film |
| 52 | Protection film |
| 54 | Resin film |
| 54a | Resin film surface in the aggregate side (aggregate-side film surface) |
| 60 | FRP precursor |

**Claims**

1. A method for producing an FRP precursor by adhering a thermosetting resin film to at least one surface of an aggregate that is in a form of a sheet, the method comprising:
   after the adhesion, transporting the FRP precursor while imparting a tension of 1.5 to 5.5 N/25mm to the FRP precursor.

2. The method for producing the FRP precursor according to claim 1, wherein
   a thickness of the aggregate is 25 $\mu$m or less.

3. The method for producing the FRP precursor according to claim 1 or 2, wherein
   a tensile strength of the aggregate is 20 to 150 N/25mm.

4. The method for producing the FRP precursor according to any one of claims 1 to 3, wherein
   the adhesion of the thermosetting resin film to at least one surface of the aggregate that is in a form of a sheet is conducted under an atmospheric pressure.

5. A method for producing an FRP, wherein the method comprises curing of the FRP precursor obtained by the production method according to any one of claims 1 to 4.

**Patentansprüche**

1. Verfahren zur Herstellung eines FVK-Vorläufers durch Anhaften eines duroplastischen Harzfilms an mindestens einer Oberfläche eines Aggregats, das in Form einer Folie vorliegt, wobei das Verfahren umfasst:
   nach der Anhaftung das Transportieren des FVK-Vorläufers unter Einwirkung einer Spannung von 1,5 bis 5,5 N/25 mm auf den FVK-Vorläufer.

2. Verfahren zur Herstellung des FVK-Vorläufers gemäß Anspruch 1, wobei
   eine Dicke des Aggregats 25 $\mu$m oder weniger beträgt.

3. Verfahren zur Herstellung des FVK-Vorläufers gemäß Anspruch 1 oder 2, wobei
   eine Zugfestigkeit des Aggregats 20 bis 150 N/25 mm beträgt.

4. Verfahren zur Herstellung des FVK-Vorläufers gemäß einem der Ansprüche 1 bis 3, wobei die Anhaftung des duroplastischen Harzfilms an mindestens einer Oberfläche des Aggregats, das in Form einer Folie vorliegt, unter Atmosphärendruck durchgeführt wird.

5. Verfahren zur Herstellung eines FVK, wobei das Verfahren das Härten des FVK-Vorläufers, der durch das Herstellungsverfahren gemäß einem der Ansprüche 1 bis 4 erhalten wird, umfasst.


**Revendications**

1. Procédé de fabrication d'un précurseur de PRV en faisant adhérer un film de résine thermodurcissable à au moins une surface d'un agrégat qui est sous la forme d'une feuille, le procédé comprenant :
après l'adhésion, transporter le précurseur de PRV tout en imposant une tension de 1,5 à 5,5 N/25 mm au précurseur de PRV.

2. Procédé de fabrication du précurseur de PRV selon la revendication 1, dans lequel une épaisseur de l'agrégat est inférieure ou égale à 25 μm.

3. Procédé de fabrication du précurseur de PRV selon la revendication 1 ou la revendication 2, dans lequel une résistance à la traction de l'agrégat est de 20 à 150 N/25 mm.

4. Procédé de fabrication du précurseur de PRV selon l'une quelconque des revendications 1 à 3, dans lequel l'adhésion du film de résine thermodurcissable à au moins une surface de l'agrégat qui est sous la forme d'une feuille est conduite à une pression atmosphérique.

5. Procédé de fabrication d'un PRV, dans lequel le procédé comprend un durcissement du précurseur de PRV obtenu par le procédé de fabrication selon l'une quelconque des revendications 1 à 4.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01272416 A

- JP 2018181513 A